# EUROPÄISCHE PATENTSCHRIFT

(11) **EP 1 387 859 B1**
(45) Veröffentlichungstag und Bekanntmachung des Hinweises auf die Patenterteilung: **14.07.2010**
(21) Anmeldenummer: 02730221.5
(22) Anmeldetag: 29.04.2002
(51) Int. Cl.: C08G 18/48, C08G 18/44, C08G 18/10, C08G 18/08, D06M 15/564

(54) **POLYURETHAN-POLYHARNSTOFF DISPERSIONEN ALS BESCHICHTUNGSMITTEL**
POLYURETHANE-POLYUREA DISPERSIONS AS COATING AGENTS
DISPERSIONS DE POLYURETHANNE-POLYUREE UTILISEES COMME AGENT D'ENDUCTION

(30) Priorität: 09.05.2001 DE 10122444
(43) Veröffentlichungstag der Anmeldung: 11.02.2004
(73) Patentinhaber: Bayer MaterialScience AG, 51368 Leverkusen (DE)
(72) Erfinder: SCHÜTZE, Detlev-Ingo, 51519 Odenthal (DE); KUREK, Gerald, 51373 Leverkusen (DE); RISCHE, Thorsten, 59423 Unna (DE); URBAN, Jürgen, 51061 Köln (DE); HASSEL, Tillmann, 50259 Pulheim (DE)
(86) Internationale Anmeldenummer: PCT/EP2002/004702
(87) Internationale Veröffentlichungsnummer: WO 2002/090413

(56) Entgegenhaltungen:
- EP-A- 0 219 677
- EP-A- 0 837 083
- DE-A- 2 252 280
- DE-A- 19 812 751

## Beschreibung

Die Erfindung betrifft neue wässrige Polyurethan-Polyharnstoff Dispersionen auf Basis von Polycarbonatpolyolen und Polytetramethylenglykolpolyolen, ein Verfahren zu deren Herstellung und ihre Verwendung als Beschichtungsmittel, insbesondere für flexible Substrate wie Textil und Leder.

Bei der Beschichtung flexibler Substrate, insbesondere Textil und Leder werden zunehmend lösemittelhaltige Systeme von lösemittelarmen bzw. lösemittelfreien wässrigen Systemen abgelöst. Die bislang von Textil- und Lederbeschichtungssystemen geforderten Eigenschaften bestehen vor allem in einer hohen Beständigkeit gegenüber Chemikalien und Wasser, einer hohen mechanischen Belastbarkeit sowie in einer hohen Zugfestigkeit und Dehnbarkeit. Diese Anforderungen werden weitgehend von Polyurethan-Polyharnstoff Dispersionen des Standes der Technik, wie z.B. in der DE-A 24 46 440, DE-A 25 51 094, DE-A 26 51 505, DE-A 26 51 506, DE-A 26 59 617 und DE-A 28 16 815 beschieben, erfüllt. Die dort genannten Systeme sind aufgrund hydrophiler Gruppen selbstemulgierend und können ohne Zuhilfenahme externer Emulgatoren in Wasser dispergiert werden.

Polyurethan-Polyharnstoff Dispersionen, im folgenden PUR-Dispersionen genannt, kommen heute in immer mehr Bereichen zur Anwendung, die resultierenden Beschichtungen müssen dementsprechend recht unterschiedliche Anforderungsprofile erfüllen. So sind für die Beschichtung flexibler Substrate, beispielsweise Textil und Leder, neben den oben angeführten Eigenschaften auch Eigenschaften, wie das Erzielen hoher Auflagen in einem Strich oder die Herstellung stabiler Schäume, wünschenswert. Hierdurch lassen sich die Verarbeitungsschritte im Gesamtbeschichtungsprozess rationalisieren und die damit verbundenen Produktionskosten reduzieren. Darüber hinaus sollten Eigenschaften wie hohe Hydrolysebeständigkeit bei gleichzeitig hoher Knick-, Kratz- sowie Abriebechtheit erfüllt werden.

Die Aufgabe der vorliegenden Erfindung bestand daher darin, alternative PUR-Dispersionen als Beschichtungsmittel für flexible Substrate bereitzustellen, die die Anforderungen der PUR-Dispersionen des Standes der Technik erfüllen, aber gleichzeitig die vorgenannten Eigenschaften aufweisen.

Es wurde nun gefunden, dass ionisch und/oder nichtionisch hydrophilierte, wässrige PUR-Dispersionen auf Basis von Polycarbonatpolyolen und Polytetramethylenglykolpolyolen die Herstellung von Beschichtungen auf Substraten mit dem zuvor genannten Eigenschaftsprofil ermöglichen. Die erfindungsgemäßen Beschichtungen weisen eine verbesserte Verschäumbarkeit, eine hohe Abriebfestigkeit sowie eine äußerst hohe Kratz-, Knick- und Hydrolysebeständigkeit auf.

Gegenstand der Erfindung sind ionisch und nichtionisch hydrophilierte, wässrige PUR-Dispersionen enthaltend
A1. Polyisocyanate,
A2. eine Mischung aus Polycarbonat- und Polytetramethylenglykolpolyolen,
A3. gegebenenfalls Monoalkohole oder Monoamine,
A4. Polyole, Aminopolyole oder Polyamine, die über carboxy- oder carboxylat- und/oder sulfonatgruppen verfügen,
A5. gegebenenfalls Polyoxyalkylenether mit mindestens einer Hydroxy- oder Aminogruppe und
A6. gegebenenfalls Antioxidantien und/oder Lichtschutzmittel und/oder andere Hilfs- und Zusatzmittel.

Bevorzugt verfügen die erfindungsgemäßen PUR-Dispersionen über eine ionische und nichtionische Hydrophilierung. Eine besonders bevorzugte Ausführungsform der erfindungsgemäßen PUR-Dispersionen ist anionisch und nichtionisch hydrophiliert.

Bevorzugt sind erfindungsgemäße PUR-Dispersionen enthaltend
A1. 5 bis 30 Gew.-% Polyisocyanate,
A2. 55 bis 87 Gew.% einer Mischung aus Polycarbonat- und Polytetramethylenglykolpolyolen,
A3. 0 bis 10 Gew.-% Monoalkohole oder Monoamine,
A4. 1 bis 20 Gew.-% Polyole, Aminopolyole oder Polyamine, die über carboxy- oder carboxylat- und/oder sulfonatgruppen Verfügen,
A5. 0 bis 10 Gew.-% Polyoxyalkylenether mit mindestens einer Hydroxy- oder Aminogruppe und
A6. 0 bis 10 Gew.-% Antioxidantien und/oder Lichtschutzmittel und/oder andere Hilfs- und Zusatzmittel, wobei die Summe der Gewichtsprozente der Komponenten A1 bis A6 100 % ergibt.

Besonders bevorzugt sind erfindungsgemäße PUR-Dispersionen enthaltend
A1. 10 bis 25 Gew.-% Polyisocyanate,
A2. 60 bis 85 Gew.-% einer Mischung aus Polycarbonat- und Polytetramethylenglykolpolyolen,
A3. 0 bis 10 Gew.-% Monoalkohole oder Monoamine,
A4. 1 bis 15 Gew.-% Polyole, Aminopolyole oder Polyamine, die über carboxy- oder carboxylat- und/oder sulfonatgruppen verfügen,
A5. 1 bis 10 Gew.-% Polyoxyalkylenether mit mindestens einer Hydroxy- oder Aminogruppe und
A6. 0,5 bis 8 Gew.-% Antioxidantien und/oder Lichtschutzmittel und/oder andere Hilfs- und Zusatzmittel, wobei die Summe der Gewichtsprozente der Komponenten A1 bis A6 100 % ergibt.

Ganz besonders bevorzugt sind erfindungsgemäße PUR-Dispersionen enthaltend
A1. 13 bis 20 Gew.-% Polyisocyanate,
A2. 70 bis 82 Gew.-% einer Mischung aus Polycarbonat- und Polytetramethylenglykolpolyolen,
A3. 0 bis 10 Gew.-% Monoalkohole oder Monoamine,
A4. 1 bis 10 Gew.-% Polyole, Aminopolyole oder Polyamine, die über carboxy- oder carboxylat- und/oder sulfonatgruppen verfügen,
A5. 1 bis 5 Gew.-% Polyoxyalkylenether mit mindestens einer Hydroxy- oder Aminogruppe und
A6. 1 bis 6 Gew.-% Antioxidantien und/oder Lichtschutzmittel und/oder andere Hilfs- und Zusatzmittel, wobei die Summe der Gewichtsprozente der Komponenten A1 bis A6 100 % ergibt.

Geeignete Diisocyanate (A1) sind grundsätzlich solche des Molekulargewichtsbereichs 140 bis 400 mit aliphatisch, cycloaliphatisch, araliphatisch und/oder aromatisch gebundenen Isocyanatgruppen, wie z.B. 1,4-Diisocyanatobutan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan, 1-Isocyanato-1-methyl-4(3)isocyanatomethylcyclohexan, Bis-(isocyanatomethyl)-norbornan, 1,3- und 1,4-Bis-(2-isocyanato-prop-2-yl)-benzol (TMXDI), 2,4- und 2,6-Diisocyanatotoluol (TDI), 2,4'- und 4,4'-Diisocyanatodiphenylmethan, 1,5-Diisocyanatonaphthalin oder beliebige Gemische solcher Diisocyanate.

Bevorzugt handelt es sich um Polyisocyanate oder Polyisocyanatgemische der genannten Art mit ausschließlich aliphatisch und/oder cycloaliphatisch gebundenen Isocyanatgruppen. Ganz besonders bevorzugte Ausgangskomponenten (A1) sind Polyisocyanate bzw. Polyisocyanatgemische auf Basis von HDI, IPDI und/oder 4,4'-Diisocyanatodicyclohexylmethan.

Weiterhin geeignet als Polyisocyanate (A1) sind beliebige, durch Modifizierung einfacher aliphatischer, cycloaliphatischer, araliphatischer und/oder aromatischer Diisocyanate hergestellte, aus mindestens zwei Diisocyanaten aufgebaute Polyisocyanate mit Uretdion-, Isocyanurat-, Urethan-, Allophanat-, Biuret-, Iminooxadiazindion- und/oder Oxadiazintrionstruktur, wie sie beispielsweise in J. Prakt. Chem. 336 (1994) 185-200, DE-A-1 670 666 DE-A-1 954 093, DE-A-2414413, DE-A-2 452 532, DE-A-2 641 380, DE-A-3 700 209, DE-A-3 900 053 und DE-A-3 928 503 oder EP-A-0 336 205 , EP-A-0 339 396 und EP-A-0 798 299 beispielhaft beschrieben sind.

Die erfindungsgemäßen PUR-Dispersionen enthalten als Komponente (A2) eine Mischung aus Polycarbonatpolyolen und Polytetramethylenglykolpolyolen. Der Anteil der Polycarbonatpolyole in der Mischung liegt zwischen 20 und 80 Gew.-%, der Anteil an Polytetramethylenglykolpolyolen liegt zwischen 80 und 20 Gew.-%. Bevorzugt ist ein Anteil von 30 bis 75 Gew.-% an Polytetramethylenglykolpolyolen und ein Anteil von 25 bis 70 Gew.-% an Polycarbonatpolyolen. Besonders bevorzugt ist ein Anteil von 35 bis 70 Gew.-% an Polytetramethylenglykolpolyolen und ein Anteil von 30 bis 65 Gew.-% an Polycarbonatpolyolen, jeweils mit der Maßgabe, dass die Summe der Gewichtsprozente der Polycarbonat- und Polytetramethylenglykolpolyole 100 % ergibt.

Der mittlere Molgewichtsbereich der polymeren Polyole (A2) liegt zwischen 400 bis 6000. Geeignete polymere Polyole (A2) sind beispielsweise Polyether, Polycarbonate, Polyestercarbonate, die eine OH-Funktionalität von mindestens 1,8 bis 4 aufweisen. Bevorzugt verwendet werden Polyole in einem mittleren Molgewichtsbereich von 600 bis 4000 mit einer OH-Funktionalität von 2 bis 3. Besonders bevorzugt sind Polyole mit mittleren Molekulargewichtsbereichen von 800 bis 2500.

Die in Frage kommenden Hydroxylgruppen aufweisenden Polycarbonate sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Vorzugsweise enthält die Diolkompomponente 40 bis 100 Gew.-% Hexandiol, vorzugsweise 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß der DE-A 1770245, oder durch Veretherung von Hexandiol mit sich selbst zum Di- oder Trihexylenglykol erhalten wurden. Die Herstellung solcher Derivate ist z.B. aus der DE-A 15 70 540 bekannt. Auch die in der DE-A 3717060 beschriebenen Polyether-Polycarbonatdiole können eingesetzt werden.

Die Hydroxylpolycarbonate sollten im wesentlichen linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit, und Sorbit, Methylglykosid, 1,3,4,6-Dianhydrohexite.

Als Polyetherpolyole geeignet sind die in der Polyurethanchemie an sich bekannten Polytetramethylenglykolpolyether, die z.B. über Polymerisation von Tetrahydrofuran durch kationische Ringöffnung, wie beispielsweise in DE-A 741 476 beschrieben, hergestellt werden können.

Für die Terminierung des Polyurethan-Prepolymers kommen monofunktionelle Alkohole (A3) und Monoamine in Betracht. Bevorzugte Monoalkohole (A3) sind aliphatische Monoalkohole mit 1 bis 18 C-Atomen, wie z.B. Ethanol, n-Butanol, Ethylenglykol-monobutylether, 2-Ethylhexanol, 1-Octanol, 1-Dodecanol, oder 1-Hexadecanol. Bevorzugte Monoamine (A3) sind aliphatische Monoamine, wie z.B. Diethylamin, Dibutylamin, Ethanolamin, N-Methylethanolamin oder N,N-Diethanolamin.

Die in den erfindungsgemäßen PUR-Dispersionen enthaltenden Polyole, Aminopolyole oder aliphatische, cycloaliphatische und araliphatische Polyamine (A4) haben ein Molgewicht unter 400 und können als Kettenverlängerer eingesetzt werden.

Komponenten (A3) bzw. (A4), die eine ionische Gruppen enthalten oder zur Ausbildung einer ionischen Gruppe befähigt sind, wie z.B. Dihydroxycarbonsäuren, Diaminocarbonsäuren, Dihydroxysulfonsäuren sowie Diaminosulfonsäuren und ihre Salze wie Dimethylolpropionsäure, Hydroxypivalinsäure, 2-(2-Amino-ethylamino)-ethansulfonsäure, Ethylendiamin-propyl- oder butylsulfonsäure, 1,2- oder 1,3-Propylendiamin-β-ethylsulfonsäure, Lysin, 3,5-Diaminobenzoesäure und deren Alkali- und/oder Ammoniumsalze; das Addukt von Natriumbisulfit an Buten-2-diol-1,4, Polyethersulfonat, das propoxylierte Addukt aus 2-Butendiol und NaHSO₃ (DE-A 24 46 440) sowie in kationische Gruppen überführbare Bausteine wie N-Methyldiethanolamin. Bevorzugt werden solche Komponenten (A3) bzw. (A4) eingesetzt, die über Carboxy- oder Carboxylat- und/oder Sulfonatgruppen verfügen.

Erfindungsgemäße PUR-Dispersionen, enthalten eine oder mehrere der Verbindungen (A3) und/oder (A4), welche über eine ionische Gruppe verfügen oder zur Ausbildung einer ionischen Gruppe befähigt ist, enthalten.

Zur Unterstützung der dispergierenden Wirkung können die erfindungsgemäßen PUR-Dispersionen hydrophile Polyoxyalkylenether (A5) mit mindestens einer Hydroxy- oder Aminogruppe in Mengen von 0 bis 10 Gew.-% bezogen auf den Festkörperanteil der PUR-Dispersion enthalten. Diese Polyether enthalten einen hohen Anteil (ca. 30 Gew.-% bis 100 Gew.-%) an Bausteinen, die vom Ethylenoxid abgeleitet sind, z.B. ethoxylierte einwertige Alkohole oder ethoxylierte Phenole. In Frage kommen linear aufgebaute Polyether mit einer Funktionalität zwischen 1 und 3, aber auch Verbindungen der allgemeinen Formel III, 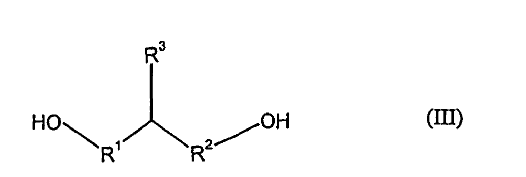 in welcher
- R¹ und R²: unabhängig voneinander jeweils einen zweiwertigen aliphatischen, cyclo- aliphatischen oder aromatischen Rest mit 1 bis 18 C-Atomen, die durch Sauerstoff und/oder Stickstoffatome unterbrochen sein können, bedeuten und
- R³: für einen nicht-hydroxyterminierten Polyester oder bevorzugt Polyether steht. Besonders bevorzugt steht R³ für einen alkoxyterminierten Polyethylenoxid- rest.

Als Lichtschutzmittel und Antioxidantien (A6) können alle für Polyurethane bzw. Polyurethandispersionen bekannten und beispielsweise in "Lichtschutzmittel für Lacke" (A. Valet, Vincentz Verlag, Hannover, 1996) und "Stabilization of Polymeric Materials" (H. Zweifel, Springer Verlag, Berlin, 1997) beschriebenen Additive gegebenenfalls verwendet werden. Bevorzugte Stabilisatoren sind sterisch gehinderte Phenole (phenolische Antioxidantien) und/oder sterisch gehinderte Amine auf Basis von 2,2,6,6-Tetramethylenpiperidin (Hindered Amine Light Stabilizers, HALS-Lichtschutzmittel). Besonders bevorzugt sind Irganox^{®} 1010 (Ciba Spezialitäten GmbH, Lampertheim, DE) und/oder Tinuvin^{®} 765 (Ciba Spezialitäten GmbH, Lampertheim, DE). Darüber hinaus können alle für PUR-Dispersionen bekannte Hilfs- und Zusatzmittel, wie beispielsweise Emulgatoren, Entschäumer, Verdicker, in den erfindungsgemäßen PUR-Dispersionen enthalten sein. Schließlich können auch Füllstoffe, Weichmacher, Pigmente, Ruß- und Kieselsäuresole, Aluminium-, Ton-, Asbest-Dispersionen in die erfindungsgemäßen PUR-Dispersionen eingearbeitet werden.

Der Feststoffgehalt der erfindungsgemäßen PUR-Dispersionen liegt zwischen 10 bis 70 %. Bevorzugt weisen sie einen Festkörperanteil von 35 bis 70 % und besonders bevorzugt von 50 bis 60 % auf.

Weiterer Gegenstand der Erfindung ist ein Verfahren zur Herstellung der erfindungsgemäßen ionisch und/oder nichtionisch hydrophilierten, wässrigen PUR-Dispersionen, dadurch gekennzeichnet, dass zunächst die Komponenten A1 und A2 sowie gegebenenfalls die Komponenten A3 bis A6 zu einem Polyurethanprepolymer umgesetzt werden, dann das Polyurethanprepolymer in oder durch Zugabe von Wasser dispergiert wird und anschließend gegebenenfalls mit A3 bis A6 zu Reaktion gebracht wird.

Die Herstellung der erfindungsgemäßen wässrigen Polyurethan-Dispersionen kann nach Methoden des Standes der Technik (z.B. Houben-Weyl, Erweiterungs- und Folgebände zur 4. Auflage, Band E20, H. Bartl und J. Falb, Stuttgart, New York, Thieme 1987, S. 1659 - 1693 oder D. Dieterich, Prog. Org. Coatings 9, 281 (1981)) erfolgen.

Das NCO/OH-Verhältnis bei der Herstellung des Prepolymeren liegt zwischen 1,2-2,8/1, bevorzugt zwischen 1,4-2,5/1, besonders bevorzugt 1,6-2,3/1 und ganz besonders bevorzugt zwischen 1,7-2,2/1.

Im ersten Schritt des erfindungsgemäßen Verfahrens werden die Komponenten A1 und A2 sowie gegebenenfalls die Komponenten A3 bis A6 zu einer PUR-Dispersion, gegebenenfalls unter zur Hilfenahme eines organischen Lösemittels, umgesetzt.

Als Lösemittel geeignet sind die an sich bekannten üblichen Lacklösemittel, wie z.B. Ethylacetat, Butylacetat, 1-Methoxypropyl-2-acetat, 3-Methoxy-n-butylacetat, Aceton, 2-Butanon, 4-Methyl-2-pentanon, Cyclohexanon, Toluol, Xylol, Chlorbenzol oder Testbenzin. Mischungen, die vor allem höher substituierte Aromaten enthalten, wie sie beispielsweise unter den Bezeichnungen Solvent Naphtha, Solvesso^{®} (Exxon, Chemicals, Houston, USA), Cypar^{®} (Shell Chemicals, Eschborn, DE), Cyclo Sol^{®} (Shell Chemicals, Eschborn, DE), Tolu Sol^{®} (Shell Chemicals, Eschborn, DE), Shellsol^{®} (Shell Chemicals, Eschborn, DE) im Handel sind, sind ebenfalls geeignet. Weitere Lösemittel sind beispielsweise Kohlensäureester, wie Dimethylcarbonat, Diethylcarbonat, 1,2-Ethylencarbonat und 1,2-Propylencarbonat, Lactone, wie β-Propiolacton, γ-Butyrolacton, ε-Caprolacton, ε-Methylcaprolacton, Propylenglykoldiacetat, Diethylenglykoldimethylether, Dipropylenglykoldimethylether, Diethylenglykolethyl- und -butyletheracetat, N-Methylpyrrolidon und N-Methylcaprolactam, oder beliebige Gemische solcher Lösemittel.

In einem weiteren Schritt werden anschließend zur Neutralisation befähigte Gruppen in die Salzform überführt und mit Wasser die Dispersion erzeugt. Je nach Neutralisationsgrad und Gehalt an ionischen Gruppen kann die Dispersion sehr feinteilig eingestellt werden, so dass sie praktisch das Aussehen einer Lösung hat. Es sind aber auch sehr grobteilige Einstellungen möglich, die ebenfalls ausreichend stabil sind. Das gegebenenfalls verwendete Lösemittel kann im Anschluss an die Dispergierung destillativ entfernt werden.

Zur Herstellung der erfindungsgemäßen Polyurethan-Dispersionen können sämtliche, aus dem Stand der Technik bekannte Verfahren, wie Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671-1682). Bevorzugt ist das Schmelz-Emulgier- und das Aceton-Verfahren. Besonders bevorzugt wird das Aceton-Verfahren.

Überschüssige Isocyanatgruppen werden durch Umsetzung mit polyfunktionellen isocyanatreaktiven Verbindungen zur Reaktion gebracht (Kettenverlängerung). Hierzu werden bevorzugt Wasser oder die bereits unter (A4) genannten Polyamine, besonders bevorzugt Di- sowie Triamine, Hydrazin und das Natriumsalz der 2-(2-Amino-ethylamino)-ethansulfonsäure eingesetzt. Auch die Terminierung mit einem Monoamin oder Monoalkohol (A3) wie z.B. Diethylamin, Dibutylamin, Ethanolamin, N-Methylethanolamin oder N,N-Diethanolamin ist möglich.

Weiterhin ist es möglich, die erfindungsgemäßen PUR-Dispersionen durch Polyacrylate zu modifizieren. Hierzu wird in Gegenwart der Polyurethan-Dispersion eine Emulsionspolymerisation von olefinisch ungesättigten Monomeren, z.B. Estern aus (Meth)acrylsäure und Alkoholen mit 1 bis 18 C-Atomen, Styrol, Vinylestern oder Butadien durchgerührt, wie es z.B. in der DE-A-1 953 348, EP-A-0 167 188, EP-A-0 189 945 und EP-A-0 308 115 beschrieben ist. Die Monomere enthalten eine oder mehrere olefinische Doppelbindungen. Daneben können die Monomere funktionelle Gruppen wie Hydroxyl-, Epoxy-, Methylol- oder Acetoacetoxygruppen enthalten.

Weiterer Gegenstand der vorliegenden Erfindung ist die Verwendung der erfindungsgemäßen hydrophilen, wässrigen PUR-Dispersionen als Beschichtungsmittel zur Herstellung beschichteter Substrate.

Gegenstand der Erfindung sind auch Beschichtungsmittel, enthaltend die erfindungsgemäßen PUR-Dispersionen.

Zur Verwendung der erfindungsgemäßen PUR-Dispersionen als Beschichtungsmittel werden die erfindungsgemäßen Polyurethan-Dispersionen entweder allein oder in Kombination mit anderen wässrigen Bindemitteln eingesetzt. Solche wässrigen Bindemittel können z.B. aus Polyester-, Polyacrylat, Polyepoxid- oder Polyurethanpolymeren aufgebaut sein. Auch die Kombination mit strahlenhärtbaren Bindemitteln, wie sie z.B. in der EP-A-0 753 531 beschrieben sind, ist möglich. Es ist ebenfalls möglich die erfindungsgemäßen PUR-Dispersionen mit anderen anionischen oder nicht-ionischen Dispersionen, wie z.B. Polyvinylacetat, Polyethylen-, Polystyrol-, Polybutadien-, Polyvinylchlorid-, Polyacrylat- und Copolymerisat-Dispersionen, zu verschneiden.

Die erfindungsgemäßen PUR-Dispersionen sind stabil, lager- und versandfähig und können zu beliebig späterem Zeitpunkt verarbeitet werden. Je nach der gewählten chemischen Zusammensetzung und Gehalt an Urethangruppen erhält man Beschichtungen mit unterschiedlichen Eigenschaften. So können weiche klebrige Schichten, thermoplastische und gummielastische Produkte der verschiedensten Härtegrade bis zu glasharten Duroplasten erhalten werden. Die Hydrophilie der Produkte kann ebenfalls in gewissen Grenzen schwanken. Die elastischen Produkte lassen sich bei höheren Temperaturen, beispielsweise 100 bis 180°C, thermoplastisch verarbeiten, sofern sie nicht chemisch vernetzt sind.

Zur Modifizierung bestimmter Eigenschaften der Beschichtungen, wie Griff, Oberflächenglätte, können oligomere Polysiloxan-Segmente enthaltende Verbindungen mit mindestens zwei gegenüber Isocyanaten reaktionsfähigen Gruppen mit Molekulargewichten von 300 bis 6000, bevorzugt von 500 bis 1500, den erfindungsgemäßen wässrigen PUR-Dispersionen zugesetzt werden. Bevorzugt werden difunktionelle Polysiloxane mit organofunktionellen Endgruppen eingesetzt. Diese Verbindungen weisen beispielsweise Struktureinheiten -O-Si-(R)₂- auf, wobei R für einen C₁-C₄-Alkyl- oder einen Phenylrest steht.

Außerdem können den erfindungsgemäßen PUR-Dispersionen die üblichen Hilfs- und Zusatzmittel der Textilbeschichtungstechnologie, wie beispielsweise Pigmente, Verlaufsmittel, UV-Stabilisatoren, Antioxidantien, Füllstoffe, Weichmacher, Ruß- und Kieselsäuresole, Aluminium-, Ton-, Asbest-Dispersionen oder Thixotropiemittel zugemischt werden. Auf diese Weise entstehen gebrauchsfertige wässrige Beschichtungsmittel, die bei Raumtemperatur praktisch unbegrenzt lagerfähig sind und bei relativ niedrigen Temperaturen von 120 bis 150°C innerhalb von 2 bis 3 Minuten zu Beschichtungen mit insbesondere sehr guten Nass-Haftfestigkeiten aushärten.

Je nach gewünschtem Eigenschaftsbild und Verwendungszweck der erfindungsgemäßen Beschichtungsmittel können bis zu 70 %, bezogen auf Gesamttrockensubstanz, solcher Füllstoffe im Endprodukt enthalten sein.

Die erfindungsgemäßen PUR-Dispersionen, insbesondere mit Festkörpergehalten größer 50 %, sind aufgrund ihrer exzellenten Verschäumbarkeit, ihrer guten Abriebfestigkeit, Kratz-, Knick- und Hydrolysebeständigkeit für Anwendungen im Bereich Polstermöbel, Arbeitsschutz und Autoinnenausstattung besonders geeignet, ebenso zur Herstellung sehr stabiler hoher Schaumauflagen in nur einem Strich, wie sie ansonsten nur mit High Solid Beschichtungsmitteln zu erzielen sind.

Gegenstand der Erfindung ist somit die Verwendung der erfindungsgemäßen PUR-Dispersionen im Bereich Polstermöbel, Arbeitsschutz und Autoinnenausstattung sowie zur Herstellung hoher Schaumauflagen in nur einem Strich.

Gegenstand der Erfindung sind ebenfalls beschichtete Substrate enthaltend ein Substrat, welches auf einer Seite eine Beschichtung, enthaltend die erfindungsgemäßen PUR-Dispersionen, aufweist.

Geeignete Substrate sind beispielsweise gewebte und nicht gewebte Textilien, Leder, Papier, Hartfaser, Stroh, papierartigen Materialien, Holz, Glas, Kunststoffen der verschiedensten Art, Keramik, Stein, Beton, Bitumen, Porzellan, Metalle oder Glasfasern. Bevorzugte Substrate sind flexible Substrate, besonders bevorzugt sind Textilien und Leder.

Die erfindungsgemäßen PUR-Dispersionen bzw. die daraus als Beschichtungsmittel hergestellten Pasten werden auf eine poröse Unterlage appliziert, die anschließend mit dem Fertigprodukt verbunden bleibt, wie z.B. gewebte oder nicht gewebte Textilien bzw. Fasermatten, Filze oder Vliese, auch Papiervliese, Schaumstoff-Folien oder Spaltleder, die aufgrund ihrer Saugwirkung eine sofortige Verfestigung des Überzugs bewirken. Anschließend wird bei erhöhter Temperatur getrocknet und gegebenenfalls verpresst. Die Trocknung kann aber auch auf glatten porösen oder nichtporösen Materialien, z.B. Glas, Papier, Karton, keramischen Materialien, Metall, Silikon-Kautschuk, Aluminiumfolie, erfolgen. Anschließend wird das fertige Flächengebilde abgehoben und als solches verwendet oder wird nach dem Umkehrverfahren durch Kleben, Flammkaschieren, Kalandern auf ein Substrat aufgebracht.

Die erfindungsgemäßen PUR-Dispersionen können unterschiedliche Funktionen übernehmen, z.B. einer antistatischen und knitterfreien Ausrüstung, als Binder für Vliese, als Klebstoffe, Haftvermittler, Kaschierungsmittel, Hydrophobierungsmittel, Weichmacher, Bindemittel, als Hilfsmittel im Zeugdruck und in der Papierindustrie, als Zusatz zu Polymerisaten, als Schlichtemittel, beispielsweise für Glasfasern und zur Lederausrüstung.

Die Applikation des erfindungsgemäßen Beschichtungsmittels kann durch direktes Streichen auf das Substrat mit Hilfe von Rakelmessern, Walzen oder Drahtrakeln erfolgen. In der Regel werden mehrere Schichten hintereinander, bevorzugt jedoch zwei, aufgebracht. Der anschließend aufgebrachte Deckstrich schützt den gesamten Verbund gegen mechanische Beanspruchung und Abrieb. Das Aufbringen des Beschichtungsverbundes aus Grund- und Deckstrich ist aber auch nach dem sogenannten Umkehrverfahren möglich. Hierbei wird zunächst der Deckstrich auf einen Trennträger aufgetragen und getrocknet. Nach dem Auftragen eines zweiten Grund- oder Haftstriches wird das textile Substrat in die noch feuchte Schicht leicht eingedrückt. Nach dem Trocknen entsteht ein fester Verbund aus Beschichtung und Substrat, der vom Trennträgern gelöst wird und in seinem Aufbau weitgehend dem der vorher beschriebenen Direktbeschichtung entspricht.

Die Trocknung der nach verschiedenen Applikationstechniken erhaltenen Produkte kann bei Raumtemperatur oder bei erhöhter Temperatur erfolgen. Die im Einzelfall zu wählende Trocknungstemperatur, die außer von der chemischen Zusammensetzung des Materials vor allem vom Feuchtigkeitsgehalt, der Trockenzeit und der Schichtdicke abhängt, wird leicht durch einen Vortest ermittelt. Bei gegebener Erhitzungszeit muss die Trockentemperatur in jedem Fall unter der Verfestigungstemperatur liegen.

Anschließend können die Flächengebilde zur Erhöhung der Widerstandsfähigkeit ihrer Oberfläche mit einer Appretur (Finish) überzogen werden. Bevorzugt werden hierfür wiederum wässrige Dispersionen oder Lösungen verwendet.

### Beispiele

Die Eigenschaften von PUR-Dispersionen für die Textilbeschichtung werden an freien Filmen bestimmt, die wie folgt hergestellt werden:

In einem Filmziehgerät, bestehend aus zwei polierten Walzen, die auf einen exakten Abstand eingestellt werden können, wird vor die hintere Walze ein Trennpapier eingelegt. Mit einer Fühlerblattlehre wird der Abstand zwischen Papier und vorderer Walze eingestellt. Dieser Abstand entspricht der Filmdicke (nass) der resultierenden Beschichtung, und kann auf die gewünschte Auflage jedes Striches eingestellt werden. Die Beschichtung ist auch konsekutiv in mehreren Strichen möglich.

Zum Aufbringen der einzelnen Striche werden die Produkte (wässrige Formulierungen werden vorher durch Zugabe von Ammoniak/Polyacrylsäure auf eine Viskosität von 4500 mPa s gestellt) auf den Spalt zwischen Papier und vorderer Walze gegossen, das Trennpapier wird senkrecht nach unten weggezogen, wobei auf dem Papier der entsprechende Film entsteht. Sollen mehrere Striche aufgebracht werden, wird jeder einzelne Strich getrocknet und das Papier erneut eingelegt.

Die Bestimmung des Moduls bei 100 % Dehnung, erfolgte nach DIN 53504 an Filmen > 100 µm Stärke.

Die Bestimmung der mittleren Teilchengrößen (angegeben ist das Zahlenmittel) der PUR-Dispersionen erfolgte mittels Laserkorrelations-Spektroskopie (Gerät: Malvern Zetasizer 1000, Malver Inst. Limited).

Die angegebenen Viskositäten verstehen sich als Auslaufzeiten, gemessen gemäß DIN 53 211 im DIN-Becher 4 mm.

### Eingesetzte Ausgangsmaterialien

- Diol I:: Polytetramethylenglykolpolyol, OHZ 112, MG = 1000 g/mol, z.B. PolyTHF 1000 (BASF AG, Ludwigshafen)
- Diol II:: Polytetramethylenglykolpolyol, OHZ 62, MG = 1800 g/mol, z.B. PolyTHF 1800 (BASF AG, Ludwigshafen)
- Diol III:: Polytetramethylenglykolpolyol, OHZ 56, Molekulargewicht 2000 g/mol, z.B. PolyTHF 2000 (BASF AG, Ludwigshafen)
- Diol IV:: Polycarbonat aus 1,6-Hexandiol, OHZ 56, Molekulargewicht 2000 g/mol, z.B. Desmophen 2020 (Bayer AG, Leverkusen)
- Diol V:: Polypropylenoxidpolyether, OHZ 56, Molekulargewicht 2000 g/mol, z.B. Desmophen 3600 (Bayer AG, Leverkusen)
- Diol VI:: Polypropylenoxidpolyether, OHZ 200, Molekulargewicht 560 g/mol, z.B. Desmophen L400 (Bayer AG, Leverkusen)
- EOX-Polyether:: Monofunktionelles Polyethylenglykol OHZ 25, Molekulargewicht 2250 g/mol, z.B. Desmophen LB 25 (Bayer AG, Leverkusen)
- Diaminosulfonat:: NH₂-CH₂CH₂-NH-CH₂CH₂-SO₃Na (45 % ig in Wasser)
- Diaminocarboxylat:: NH₂-CH₂-CH₂-NH-CH₂-CH₂-COOH (40 %ig in Wasser), z.B. KV 1386 (BASF AG, Ludwigshafen)

### Hydrophilierungsmittel:

gemäß Beispiel 1 in EP-A 916647, Seite 3.

### PUR I:

Anionisch-nichtionische aliphatische C₃-Polyetherpolycarbonatpolyurethan Dispersion mit einem Festkörpergehalt von 40 % und folgenden physikalischen Eigenschaften: Modul 100% (DIN 53504) = 2,4 MPa, Zugfestigkeit (DIN 53504) = 25,9 MPa, Bruchdehnung (DIN 53504) = 840 %, Auslaufzeit bei 23°C (4mm Becher nach AFAM 2008/1050304-00 D) = 25 ± 15s, wie z.B. Impranil DLV (Bayer AG, Leverkusen).

### PUR II:

Anionische aliphatische Polyesterpolyurethan Dispersion mit einem Festkörpergehalt von 50 % und folgenden physikalischen Eigenschaften: Modul 100% (DIN 53504) = 2,1 MPa, Zugfestigkeit (DIN 53504) = 25,0 MPa, Bruchdehnung (DIN 53504) = 600 %, Auslaufzeit bei 23°C (4mm Becher nach AFAM 2008/1050304-00 D) ≤ 70 s, wie z.B. Impranil DLS (Bayer AG, Leverkusen).

### PUR III:

Anionische aliphatische Polyesterpolyurethan Dispersion mit einem Festkörpergehalt von 40 % und folgenden physikalischen Eigenschaften: Modul 100% (DIN 53504) = 2,0 MPa, Zugfestigkeit (DIN 53504) = 20,0 MPa, Bruchdehnung (DIN 53504) = 700 %, Auslaufzeit bei 23°C (4mm Becher nach AFAM 2008/1050304-00 D) ≤ 70 s, wie z.B. Impranil DLN (Bayer AG, Leverkusen).

### Anwendungsbeispiele

### Beispiel 1

### Ansatz:

| | | |
|---|---|---|
| Teil 1: | 203,3 g | Diol III |
| | 156,0 g | Diol IV |
| | 77,0 g | Diol I |
| | 14,6 g | EOX-Polyether |
| | | |
| Teil 2: | 48,9 g | Hexandiisocyanat-1,6 |
| | 64,6 g | Isophorondiisocyanat |
| | | |
| Teil 3: | 1016,5 g | Aceton |
| | | |
| Teil 4: | 34,7 g | Isophorondiamin |
| | 6,9 g | Diaminosulfonat |
| | 2,2 g | Hydrazinhydrat |
| | 134,4 g | Wasser |
| | | |
| Teil 5: | 298,1 g | Wasser |

### Durchführung :

In das bei 120°C entwässerte Gemisch von Teil 1 gibt man bei 70°C Teil 2 zu, heizt auf 90°C auf und rührt solange bei 90°C bis ein konstanter NCO-Wert erreicht ist. Prepolymer mit Teil 3 bei 60°C lösen und 15 min nachrühren. Teil 4 bei 48°C innerhalb von 15 min zugeben und 15 min nachrühren. Teil 5 innerhalb von 10 min zugeben, Aceton abdestillieren und Festkörpergehalt auf 60 % einstellen.

Es resultiert eine Dispersion mit einem Feststoffgehalt von 60,4 % und einer Auslaufviskosität bei 23°C (4 mm Becher nach AFAM 2008/1050304-00 D) von 27 s.

### Beispiel 2

### Ansatz:

| | | |
|---|---|---|
| Teil 1: | 400,0 g | Diol IV |
| | 260,0 g | Diol III |
| | 27,0 g | EOX-Polyether |
| | 8,6 g | Dimethylolpropionsäure |
| | | |
| Teil 2: | 121,0 g | Hexandiisocyanat-1,6 |
| | | |
| Teil 3: | 1451,7 g | Aceton |
| | | |
| Teil 4: | 5,2 g | 1,2 Diaminoethan |
| | 3,0 g | Hydrazinhydrat |
| | 24,0 g | Diaminocarboxylat |
| | 141,8 g | Wasser |
| | | |
| Teil 5: | 1091,9 g | Wasser |

### Durchführung: analog Beispiel 1 (Feststoffgehalt 40 %)

Es resultiert eine Dispersion mit einem Feststoffgehalt von 41,0 % und einer Auslaufviskosität bei 23°C (4 mm Becher nach AFAM 2008/1050304-00 D) von 20 s.

### Beispiel 3

### Ansatz:

| | | |
|---|---|---|
| Teil 1: | 311,7 g | Diol II |
| | 88,0 g | Diol IV |
| | 12,4 g | EOX-Polyether |
| | | |
| Teil 2: | 41,4 g | Hexandiisocyanat-1,6 |
| | 54,7 g | Isophorondiisocyanat |
| | | |
| Teil 3: | 903,5 g | Aceton |
| | | |
| Teil 4: | 30,2 g | Isophorondiamin |
| | 5,22 g | Diaminosulfonat |
| | 0,75 g | Hydrazinhydrat |
| | 137,8 g | Wasser |
| | | |
| Teil 5: | 249,5 g | Wasser |

### Durchführung: analog Beispiel 1

Es resultiert eine Dispersion mit einem Feststoffgehalt von 59,5 % und einer Auslaufviskosität bei 23°C (4 mm Becher nach AFAM 2008/1050304-00 D) von 29 s.

### Beispiel 4 (Vergleichsbeispiel)

### Ansatz:

| | | |
|---|---|---|
| Teil 1: | 130,0 g | Diol III |
| | 200,0 g | Diol IV |
| | 13,5 g | EOX-Polyether |
| | 4,3 g | Dimethylolpropionsäure |
| | | |
| Teil 2: | 60,5 g | Hexandiisocyanat-1,6 |
| | | |
| Teil 3: | 725,9 g | Aceton |
| | | |
| Teil 4: | 2,6 g | 1,2-Ethylendiamin |
| | 25,2 g | Hydrophilierungsmittel |
| | 1,5 g | Hydrazinhydrat |
| | 1,6 g | Kaliumhydroxid |
| | 101,1 g | Wasser |
| | | |
| Teil 5: | 512,2 g | Wasser |

### Durchführung: analog Beispiel 1 (Feststoffgehalt 40 %)

Es resultiert eine Dispersion mit einem Feststoffgehalt von 40,4 % und einer Auslaufviskosität bei 23°C (4 mm Becher nach AFAM 2008/1050304-00 D) von 15 s.

### Beispiel 5

### Ansatz:

| | | |
|---|---|---|
| Teil 1: | 30,0 g | Diol III |
| | 200,0 g | Diol IV |
| | 13,5 g | EOX-Polyether |
| | 4,3 g | Dimethylolpropionsäure |
| | | |
| Teil 2: | 60,5 g | Hexandiisocyanat-1,6 |
| | | |
| Teil 3: | 725,9 g | Aceton |
| | | |
| Teil 4: | 2,6 g | 1,2-Ethylendiamin |
| | 25,2 g | Hydrophilierungsmittel |
| | 1,50 g | Hydrazinhydrat |
| | 2,50 g | Dimethylethanolamin |
| | 109,6 g | Wasser |
| | | |
| Teil 5: | 505,0 g | Wasser |

### Durchführung: analog Beispiel 1 (Feststoffgehalt 40 %)

Es resultiert eine Dispersion mit einem Feststoffgehalt von 40,0 % und einer Auslaufviskosität bei 23°C (4 mm Becher nach AFAM 2008/1050304-00 D) von 19 s.

### Beispiel 6

### Ansatz:

| | | |
|---|---|---|
| Teil 1: | 340,0 g | Diol I |
| | 320,0 g | Diol IV |
| | 27,0 g | EOX-Polyether |
| | 8,6 g | Dimethylolpropionsäure |
| | | |
| Teil 2: | 149,6 g | Hexandiisocyanat-1,6 |
| | | |
| Teil 3: | 1502,6 g | Aceton |
| | | |
| Teil 4: | 4,9 g | 1,2-Ethylendiamin |
| | 53,6 g | Hydrophilierungsmittel |
| | 3,0 g | Hydrazinhydrat |
| | 5,3 g | Dimethylethanolamin |
| | 220,8 g | Wasser |
| | | |
| Teil 5: | 1049,1 g | Wasser |

### Durchführung: analog Beispiel 1 (Feststoffgehalt 40 %)

Es resultiert eine Dispersion mit einem Feststoffgehalt von 40,3 % und einer Auslaufviskosität bei 23°C (4 mm Becher nach AFAM 2008/1050304-00 D) von 16 s.

### Vergleichsbeispiele

### Beispiel 7

### Ansatz:

| | | |
|---|---|---|
| Teil 1 : | 250,0 g | Diol III |
| | 80,0 g | Diol V |
| | 13,5 g | EOX-Polyether |
| | 4,3 g | Dimethylolpropionsäure |
| | | |
| Teil 2: | 67,2 g | Hexandiisocyanat-1,6 |
| | | |
| Teil 3: | 737,8 g | Aceton |
| | | |
| Teil 4: | 4,5 g | 1,2-Ethylendiamin |
| | 13,1 g | Diaminosulfonat |
| | 2,65 g | Hydrazinhydrat |
| | 130,9 g | Wasser |
| | | |
| Teil 5: | 501,6 g | Wasser |

### Durchführung: analog Beispiel 1 (Feststoffgehalt 40 %)

Es resultiert eine Dispersion mit einem Feststoffgehalt von 40,9 % und einer Auslaufviskosität bei 23°C (4 mm Becher nach AFAM 2008/1050304-00 D) von 17 s.

### Beispiel 8

### Ansatz:

| | | |
|---|---|---|
| Teil 1: | 250,0 g | Diol III |
| | 22,0 g | Diol VI |
| | 13,5 g | EOX-Polyether |
| | 4,3 g | Dimethylolpropionsäure |
| | | |
| Teil 2: | 60,5 g | Hexandiisocyanat-1,6 |
| | | |
| Teil 3: | 622,8 g | Aceton |
| | | |
| Teil 4: | 2,6 g | 1,2-Ethylendiamin |
| | 13,0 g | Diaminosulfonat |
| | 1,50 g | Hydrazinhydrat |
| | 87,5 g | Wasser |
| | | |
| Teil 5: | 444,4 g | Wasser |

### Durchführung: analog Beispiel 1 (Feststoffgehalt 40 %)

Es resultiert eine Dispersion mit einem Feststoffgehalt von 39,0 % und einer Auslaufviskosität bei 23°C (4 mm Becher nach AFAM 2008/1050304-00 D) von 15 s.

### Prüfergebnisse der Anwendungsbeispiele 1 bis 6 und der Vergleichsbeispiele 7 und 8

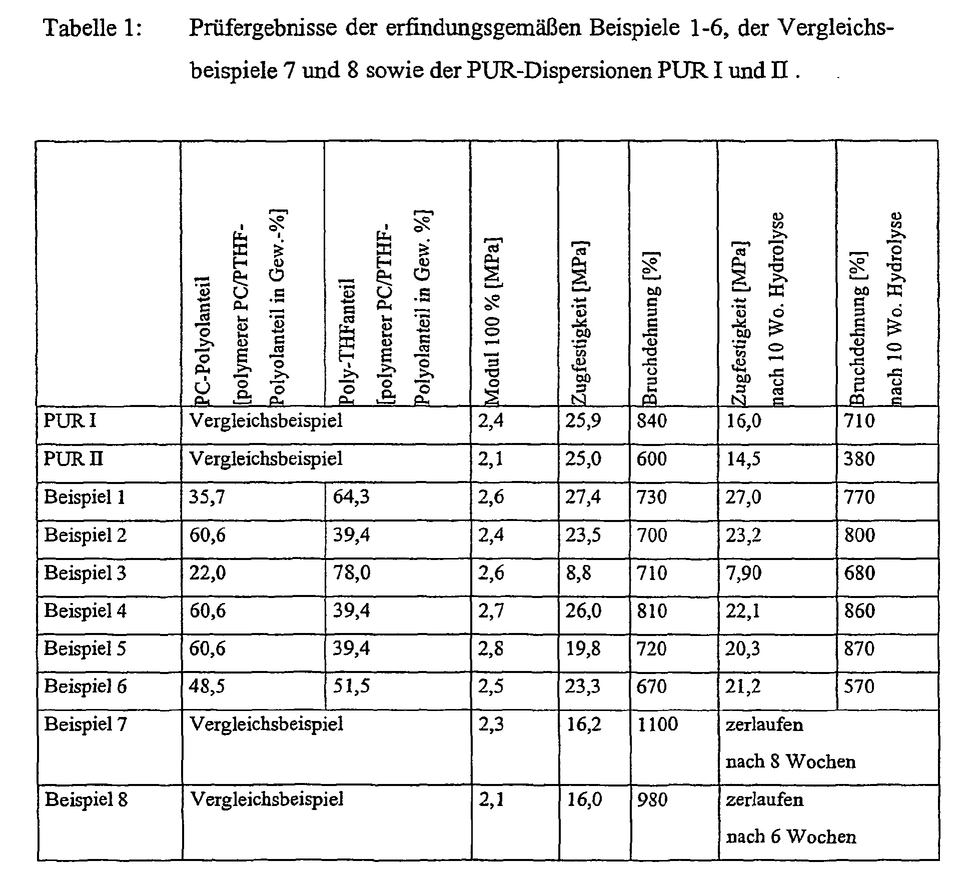

Die erfindungsgemäßen PUR-Dispersionen aus Beispiel 1-6 zeigen wesentlich bessere Hydroysebeständigkeiten als die PUR-Dispersionen des Stands der Technik (PUR I/II) sowie die Vergleichsbeispiele 7 und 8.

### Beispiel 9 Verwendung der erfindungsgemäßen PUR-Dispersionen zur Herstellung von Schäumen

Richtrezeptur für foggingfreie Schlagschäume bis zur Dichte 0.4 kg/dm³:

| | |
|---|---|
| PUR-Dispersion aus Beispiel 1 | 1000 g |
| Isoversal WL - Farben (ISL-Chemie) | 30 - 100 g |
| Levapon TH | 5 g |
| Stokal SR (Stockhausen) | 10 g |
| Mirox AM (Stockhausen) | 20 g |
| Ammoniaklösung, conc. | 5 g |
| Acrafix ML | 10 g |

Die Herstellung des Schlagschaums erfolgt mit handelsüblichen Schaumaggregaten, z.B. Hansa Mix.

Nach dieser Arbeitsweise hergestellte Schaumpasten aus Beispiel 1 lassen sich in einem Strich zu Schäumen mit einer Schichtdicke von mindestens 2.0 - 2.5 mm ausstreichen, also zu Feststoffauflagen von nahezu 800 g/m² und mehr, abhängig von der Wirksamkeit des Trocknungsaggregats. Unter gleichartigen Bedingungen hergestellte Schäume aus PUR II erreichen Schaumauflagen von etwa 200 - 250 g/m², also Schichtstärken von 0.6 - 0.8 mm. Höhere Auflagen führen zu tiefen Rissen in der Schaumoberfläche.

Bei Verwendung von PUR III anstelle der PUR-Dispersion aus Beispiel 1 sind Schaumschichten von 0.3 - 0.4 mm, bei Feststoffauflagen von 70 - max. 100 g erreichbar. Geht man darüber hinaus, treten sofort Rissbildungen auf.

Darüber hinaus weist der aus der PUR-Dispersion von Beispiel 1 hergestellte Schaum deutlich bessere Kratz- und Abriebfestigkeit als die Schäume der konventionellen PUR-Dispersionen (PUR II und III) des Stands der Technik auf.

### Beispiel 10 Verwendung der erfindungsgemäßen PUR-Dispersionen als Beschichtungsmittel für Leder

### Eingesetzte Materialien und Formulierungen

### A) Binder

1) Anionische aliphatische lineare PUR Dispersion mit Isophorondiisocyanat/Butandiol - Hartsegmenten, Polypropylenoxid Weichsegmenten und Carboxylhydrophilierung; Festkörpergehalt 37 %; mit folgenden Eigenschaften: Shore A = 85; 100% Modul =18 MPa; Zugfestigkeit =30 MPa; Bruchdehnung = 400 %.
2) Anionische aliphatische verzweigte PUR Dispersion mit Polyester - Weichsegmenten, Carbazid Hartsegmenten und Sulfonat - Hydrophilierung; Festkörpergehalt 40 % mit folgenden Eigenschaften: Shore A Härte= 95; 100 % Modul = 20 MPa; Zugfestigkeit = 40 MPa; Bruchdehnung = 300 %
3) Anionische aliphatische lineare PUR Dispersion mit Polycarbonat Weichsegmenten, Carbazid und Polyharnstoff Hartsegmenten und synergistischer Polyether/Sulfonat/Carboxyl-Hydrophilierung; Festkörpergehalt 40 % mit folgenden Eigenschaften: Shore A Härte 85; 100 % Modul = 4,1 MPa; Zugfestigkeit = 43 MPa; Bruchdehnung = 530 %
4) Erfindungsgemäße PUR-Dispersion (Beispiel 1)
5) Handelsübliche Abmischung eines aliphatischen Polyurethans mit einem Acrylat; Festkörpergehalt 49% mit folgenden Eigenschaften: 100 % Modul = 2,2 MPa; Zugfestigkeit = 11,5 MPa; Bruchdehnung = 670 %

### B) NCO Prepolymer:

80 %ige Lösung eines Prepolymers in Ethylacetat, hergestellt aus einem trifunktionellem Polyether (MN = 4800); einem linearem Polyadipat (MN = 1700) und Diphenylmethan - diisocyanat Isomerengemisch. Der NCO - Gehalt des Produkts beträgt 3,6 %.

### C) Härter für das Prepolymer

Formulierung eines aliphatischen Diamins mit Hilfs- und Zusatzstoffen in Butanon; 400 g der Formulierung entsprechen 1 Val NH₂.

### D) Weitere Komponenten:

a) Formulierung eines hydrophilierten HDI - Trimerisats in Propylenglykoldiacetat; Wirkstoffgehalt 50 %; NCO-Gehalt 8,6 %; Vernetzer für wässrige Binder
b) Wässrige Rußpräparation; Rußgehalt 14 %.
c) Wassermischbare Formulierung eines assoziativen PUR - Verdickers; Wirkstoffgehalt 8 %.
d) Wasserdispergierbare Silikon Formulierung ; Griffmittel.
e) Wasserlösliches Polyether- Trisiloxan; Verlaufshilfsmittel.

### Beschichtung von Leder

### Herstellung der Beschichtung auf dem Trennträger

### Deckstrich

Aus 330 Tl PUR 1; 330 Tl PUR 2; 330T1 PUR 3; 20 Tl Silikon d; 40 Tl Rußpräparation (b);
20 Tl Siloxan (e) und 60 Tl PUR Verdicker (c) wird eine Abmischung hergestellt. Diese Abmischung wird auf einer technischen Beschichtungsanlage auf ein handelsübliches Trennpapier (ULTRACAST Soave) so aufgerakelt (Rakelspalt 0,08 mm), dass eine Feststoffauflage von 25 g pro Quadratmeter resultiert. Die Beschichtung wird innerhalb 5 min getrocknet (Temperaturprogramm 80 - 150°C).

### Zwischenstrich

Es wird eine Mischung aus 1000 Tl erfindungsgemäßen Binder 4; 40 Tl Rußpräparation (b); 15 T1 Siloxan (e) und 80 Tl Verdicker (c) hergestellt. Diese Mischung wird auf den getrockneten Deckstrich so gerakelt, dass eine Feststoffauflage von 45 g pro Quadratmeter resultiert (Rakelspalt 0,12 mm). Der Zwischenstrich wird entsprechend dem Deckstrich getrocknet.

Auf diese Weise wird ein mit Deck- und Zwischenstrich versehener Trennträger erhalten. Die Beschichtung wird nun auf zwei verschiedene Arten mit Spaltleder verklebt. Nach Verklebung wird das Trennpapier abgezogen und die resultierenden beschichteten Leder werden beurteilt und auf physikalische Echtheiten geprüft.

### A) Verklebung wässrig

Es wird eine Mischung aus 1000 Tl Abmischung 5; 50 T1 Vernetzer (a) und 60 Tl Verdicker (c) hergestellt. Diese Mischung wird so auf das mit Deck - und Zwischenstrich versehene Trennpapier gerakelt, dass eine Feststoffauflage von 50 g pro Quadratmeter resultiert (Rakelspalt 0,18 mm). Der Klebstrich wird nur schonend mit einem Temperaturprogramm von 80 - 105°C getrocknet, so dass er noch klebrig aus dem Trockenkanal kommt. Auf diesen Klebstrich wird ein Spaltleder aufgelegt und mittels einer Rolle mit mäßigem Druck angedrückt. Nach 15 Min wird dann das Trennpapier abgezogen (Leder A).

### B) Verklebung organisch

Auf den mit Deck- und Zwischenstrich versehenen Trennträger wird in einer technischen 2K - Spritzanlage eine Mischung aus Prepolymer C und Härter D mit Mischungsverhältnis 1000: 318 so aufgespritzt, dass eine Feststoffauflage von 100 g pro Quadratmeter resultiert. In die reagierende Masse wird ein Spaltleder gelegt und mittels einer Rolle mit mäßigem Druck angedrückt. Danach wird 5 min bei 80°C getrocknet und das Trennpapier abgezogen (Leder B).

Sowohl Leder A als auch Leder B zeichneten sich durch starke Fülle und Deckung der Beschichtung aus. Sie waren beide extrem festnarbig.

Die physikalischen Echtheiten beider Leder waren wie folgt:

| | |
|---|---|
| Trockenknickechtheiten : | 100 000 Knickungen ohne Beschädigung |
| Naßknickechheiten : | 100 000 Knickungen ohne Beschädigung |
| Knickechtheiten bei -25°C: | 30 000 Knickungen ohne Beschädigung |
| Haftung der Beschichtung: | trocken>20N/cm (Leder A+B); nass 9 N/cm (Leder A); >5 N/cm (Leder B) |

Nach 7 tägiger Lagerung bei 70°C und 95° relativer Feuchte war der Aspekt beider beschichteter Leder nicht verändert; die Knickechtheitsprüfung (Trockenknickungen) nach diesem Lagerversuch lieferte folgendes Resultat:

| | |
|---|---|
| Leder A: | 100 000 Knickungen mit ganz leichter Beschädigung; |
| Leder B: | 100 000 Knickungen ohne Beschädigung |

## Patentansprüche

1. Ionisch und/ nichtionisch hydrophilierte, wässrige PUR-Dispersionen enthaltend
A1. Polyisocyanate,
A2. eine Mischung aus Polycarbonat- und Polytetramethylenglykolpolyolen,
A3. gegebenenfalls Monoalkohole oder Monoamine,
A4. Polyole, Aminopolyole oder Polyamine, die über Carboxy- oder Carboxylat- und/oder Sulfonatgruppen verfügen,
A5. gegebenenfalls Polyoxyalkylenether mit mindestens einer Hydroxy- oder Aminogruppe und
A6. gegebenenfalls Antioxidantien und/oder Lichtschutzmittel und/oder andere Hilfs- und Zusatzmittel.

2. PUR-Dispersionen gemäß Anspruch 1 enthaltend
A1. 5 bis 30 Gew.% Polyisocyanate,
A2. 55 bis 87 Gew.-% einer Mischung aus Polycarbonat- und Polytetramethylenglykolpolyolen,
A3. 0 bis 10 Gew.-% Monoalkohole oder Monoamine,
A4. 1 bis 20 Gew.-% Polyole, Aminopolyole oder Polyamine, die über Carboxy- oder Carboxylat- und/oder Sulfonatgruppen verfügen,
A5. 0 bis 10 Gew.-% Polyoxyalkylenether mit mindestens einer Hydroxy- oder Aminogruppe und
A6. 0 bis 10 Gew.-% Antioxidantien und/oder Lichtschutzmittel und/oder andere Hilfs- und Zusatzmittel, wobei die Summe der Gewichtsprozente der Komponenten A1 bis A6 100 % ergibt.

3. PUR-Dispersionen gemäß Anspruch 1 enthaltend
A1. 10 bis 25 Gew.-% Polyisocyanate,
A2. 60 bis 85 Gew.-% einer Mischung aus Polycarbonat- und Polytetramethylenglykolpolyolen,
A3. 0 bis 10 Gew.% Monoalkohole oder Monoamine,
A4. 1 bis 15 Gew.-% Polyole, Aminopolyole oder Polyamine, die über Carboxy- oder Carboxylat- und/oder Sulfonatgruppen verfügen,
A5. 1 bis 10 Gew.% Polyoxyalkylenether mit mindestens einer Hydroxy- oder Aminogruppe und
A6. 0,5 bis 8 Gew.-% Antioxidantien und/oder Lichtschutzmittel und/oder andere Hilfs- und Zusatzmittel, wobei die Summe der Gewichtsprozente der Komponenten A1 bis A6 100 % ergibt.

4. PUR-Dispersionen gemäß Anspruch 1 enthaltend
A1. 13 bis 20 Gew.-% Polyisocyanate,
A2. 70 bis 82 Gew.% einer Mischung aus Polycarbonat- und Polytetramethylenglykolpolyolen,
A3. 0 bis 10 Gew.-% Monoalkohole oder Monoamine,
A4. 1 bis 10 Gew.-% Polyole, Aminopolyole oder Polyamine, die über Carboxy- oder Carboxylat- und/oder Sulfonatgruppen verfügen,
A5. 1 bis 5 Gew.-% Polyoxyalkylenether mit mindestens einer Hydroxy- oder Aminogruppe und
A6. 1 bis 6 Gew.-% Antioxidantien und/oder Lichtschutzmittel und/oder andere Hilfs- und Zusatzmittel, wobei die Summe der Gewichtsprozente der Komponenten A1 bis A6 100 % ergibt.

5. PUR-Dispersionen gemäß Anspruch 1, **dadurch gekennzeichnet, dass** der Anteil der Polycarbonatpolyole in der Mischung A2 zwischen 20 und 80 Gew.%, der Anteil an Polytetramethylenglykolpolyole zwischen 80 und 20 Gew.-% liegt, wobei die Summe der Gewichtsprozente der Polycarbonat- und Polytetramethylenglykolpolyole 100 % ergibt.

6. PUR-Dispersionen gemäß Anspruch 5, **dadurch gekennzeichnet, dass** der Anteil der Polycarbonatpolyole in der Mischung A2 zwischen 25 und 70 Gew.-%, der Anteil an Polytetramethylenglykolpolyole zwischen 30 und 75 Gew.-% liegt, wobei die Summe der Gewichtsprozente der Polycarbonat- und Polytetramethylenglykolpolyole 100 % ergibt.

7. PUR-Dispersionen gemäß Anspruch 5, **dadurch gekennzeichnet, dass** der Anteil der Polycarbonatpolyole in der Mischung A2 zwischen 30 und 65 Gew.-%, der Anteil an Polytetramethylenglykolpolyole zwischen 35 und 70 Gew.-% liegt, wobei die Summe der Gewichtsprozente der Polycarbonat- und Polytetramethylenglykolpolyole 100 % ergibt.

8. Verfahren zur Herstellung der PUR-Dispersionen gemäß Anspruch 1, **dadurch gekennzeichnet, dass** zunächst die Komponten A1 und A2 sowie gegebenenfalls die Komponenten A3 bis A6 zu einem Polyurethanprepolymer umgesetzt werden, dann das Polyurethanprepolymer in oder durch Zugabe von Wasser dispergiert wird und anschließend gegebenenfalls mit A3 bis A6 zur Reaktion gebracht wird.

9. Verwendung der PUR-Dispersionen gemäß Anspruch 1 als Beschichtungsmittel zur Herstellung beschichteter Substrate.

10. Verwendung der PUR-Dispersionen gemäß Anspruch 9, **dadurch gekennzeichnet, dass** das Substrat Textil oder Leder ist.

11. Verwendung der PUR-Dispersionen gemäß Anspruch 1 im Bereich Polstermöbel, Arbeitsschutz und Autoinnenausstattung.

12. Verwendung der PUR-Dispersionen gemäß Anspruch 1 zur Herstellung hoher Schaumauflagen in nur einem Strich.

13. Beschichtete Substrate enthaltend ein Substrat, welches auf einer Seite eine Beschichtung, enthaltend PUR-Dispersionen gemäß Anspruch 1, aufweist.

14. Beschichtungsmittel, enthaltend die PUR-Dispersionen gemäß Anspruch 1.

## Claims

1. Ionically and non-ionically hydrophilised, aqueous PU dispersions containing
A1. polyisocyanates,
A2. a mixture of polycarbonate and polytetramethylene glycol polyols,
A3. optionally monoalcohols or monoamines,
A4. polyols, amino polyols or polyamines having carboxy or carboxylate and/or sulfonate groups,
A5. optionally polyoxyalkylene ethers with at least one hydroxyl or amino group and
A6. optionally antioxidants and/or light stabilisers and/or other auxiliary substances and additives.

2. PU dispersions according to claim 1 containing
A1. 5 to 30 wt.% polyisocyanates,
A2. 55 to 87 wt.% of a mixture of polycarbonate and polytetramethylene glycol polyols,
A3. 0 to 10 wt.% monoalcohols or monoamines,
A4. 1 to 20 wt.% polyols, aminopolyols or polyamines having carboxy or carboxylate and/or sulfonate groups,
A5. 0 to 10 wt.% polyoxyalkylene ethers with at least one hydroxyl or amino group and
A6. 0 to 10 wt.% antioxidants and/or light stabilisers and/or other auxiliary substances and additives, whereby the sum of the percentages by weight of components A1 to A6 is 100 %.

3. PU dispersions according to claim 1 containing
A1. 10 to 25 wt.% polyisocyanates,
A2. 60 to 85 wt.% of a mixture of polycarbonate and polytetramethylene glycol polyols,
A3. 0 to 10 wt.% monoalcohols or monoamines,
A4. 1 to 15 wt.% polyols, aminopolyols or polyamines having carboxy or carboxylate and/or sulfonate groups,
A5. 1 to 10 wt.% polyoxyalkylene ethers with at least one hydroxyl or amino group and
A6. 0.5 to 8 wt.% antioxidants and/or light stabilisers and/or other auxiliary substances and additives, whereby the sum of the percentages by weight of components A1 to A6 is 100 %.

4. PU dispersions according to claim 1 containing
A1. 13 to 20 wt.% polyisocyanates,
A2. 70 to 82 wt.% of a mixture of polycarbonate and polytetramethylene glycol polyols,
A3. 0 to 10 wt.% monoalcohols or monoamines,
A4. 1 to 10 wt.% polyols, aminopolyols or polyamines having carboxy or carboxylate and/or sulfonate groups,
A5. 1 to 5 wt.% polyoxyalkylene ethers with at least one hydroxyl or amino group and
A6. 1 to 6 wt.% antioxidants and/or light stabilisers and/or other auxiliary substances and additives, whereby the sum of the percentages by weight of components A1 to A6 is 100 %.

5. PU dispersions according to claim 1, **characterised in that** the proportion of polycarbonate polyols in mixture A2 is between 20 and 80 wt.%, the proportion of polytetramethylene glycol polyols is between 80 and 20 wt.%, whereby the sum of the percentages by weight of polycarbonate and polytetramethylene glycol polyols is 100 %.

6. PU dispersions according to claim 5, **characterised in that** the proportion of polycarbonate polyols in mixture A2 is between 25 and 70 wt.%, the proportion of polytetramethylene glycol polyols is between 30 and 75 wt.%, whereby the sum of the percentages by weight of polycarbonate and polytetramethylene glycol polyols is 100 %.

7. PU dispersions according to claim 5, **characterised in that** the proportion of polycarbonate polyols in mixture A2 is between 30 and 65 wt.%, the proportion of polytetramethylene glycol polyols is between 35 and 70 wt.%, whereby the sum of the percentages by weight of polycarbonate and polytetramethylene glycol polyols is 100 %.

8. Process for the production of the PU dispersions according to claim 1, **characterised in that** components A1 and A2 and optionally components A3 to A6 are first reacted to form a polyurethane prepolymer, then the polyurethane prepolymer is dispersed in or by addition of water and then optionally reacted with A3 to A6.

9. Use of the PU dispersions according to claim 1 as coating compounds for the production of coated substrates.

10. Use of the PU dispersions according to claim 9, **characterised in that** the substrate is textiles or leather.

11. Use of the PU dispersions according to claim 1 in the area of upholstered furniture, industrial safety and car interior trim.

12. Use of the PU dispersions according to claim 1 for the production of thick foam deposits in a single coat.

13. Coated substrates comprising a substrate displaying on one side a coating containing PU dispersions according to claim 1.

14. Coating compounds containing the PU dispersions according to claim 1.

## Revendications

1. Dispersions de PUR aqueuses, ioniquement et non ioniquement hydrophilisées contenant
A1. des polyisocyanates,
A2. un mélange de polycarbonate- et de polytétraméthylèneglycolpolyols,
A3. éventuellement des monoalcools ou des monoamines,
A4. des polyols, des aminopolyols ou des polyamines qui disposent de groupes carboxy ou carboxylate et/ou sulfonate,
A5. éventuellement un polyoxyalkylèneéther avec au moins un groupe hydroxy ou amino,
A6. éventuellement des antioxydants et/ou des agents de protection à la lumière et/ou d'autres auxiliaires et additifs.

2. Dispersions de PUR selon la revendication 1 contenant
A1. de 5 à 30 % en poids de polyisocyanates,
A2. de 55 à 87 % en poids d'un mélange de polycarbonate- et de polytétraméthylèneglycolpolyols,
A3. de 0 à 10 % en poids de monoalcools ou de monoamines,
A4. de 1 à 20 % en poids de polyols, d'aminopolyols ou de polyamines, qui disposent de groupes carboxy ou carboxylate et/ou sulfonate,
A5. de 0 à 10 % en poids d'un polyoxyalkylèneéther avec au moins un groupe hydroxy ou amino, et
A6. de 0 à 10 % en poids d'antioxydants et/ou d'agents de protection à la lumière et/ou d'autres auxiliaires et additifs, la somme des pourcents en poids des constituants A1 à A6 étant égale à 100 %.

3. Dispersions de PUR selon la revendication 1 contenant
A1. de 10 à 25 % en poids de polyisocyanates,
A2. de 60 à 85 % en poids d'un mélange de polycarbonate- et de polytétraméthylèneglycolpolyols,
A3. de 0 à 10 % en poids de monoalcools ou de monoamines,
A4. de 1 à 15 % en poids de polyols, d'aminopolyols ou de polyamines, qui disposent de groupes carboxy ou carboxylate et/ou sulfonate,
A5. de 1 à 10 % en poids d'un polyoxyalkylèneéther avec au moins un groupe hydroxy ou amino, et
A6. de 0,5 à 8 % en poids d'antioxydants et/ou d'agents de protection à la lumière et/ou d'autres auxiliaires et additifs, la somme des pourcents en poids des constituants A1 à A6 étant égale à 100 %.

4. Dispersions de PUR selon la revendication 1 contenant
A1. de 13 à 20 % en poids de polyisocyanates,
A2. de 70 à 82 % en poids d'un mélange de polycarbonate- et de polytétraméthylèneglycolpolyols,
A3. de 0 à 10 % en poids de monoalcools ou de monoamines, A4. de 1 à 10 % en poids de polyols, d'aminopolyols ou de polyamines, qui disposent de groupes carboxy ou carboxylate et/ou sulfonate,
A5. de 1 à 5 % en poids de polyoxyalkylèneéther avec au moins un groupe hydroxy ou amino, et
A6. de 1 à 6 % en poids d'antioxydants et/ou d'agents de protection à la lumière et/ou d'autres auxiliaires et additifs, la somme des pourcents en poids des constituants A1 à A6 étant égale à 100 %.

5. Dispersions de PUR selon la revendication 1, **caractérisées en ce que** la part des polycarbonatepolyols dans le mélange A2 est de 20 à 80 % en poids, la part des polytétraméthylèneglycolpolyols est de 80 à 20 % en poids, la somme des pourcents en poids des polycarbonate- et polytétraméthylèneglycolpolyols étant égale à 100 %.

6. Dispersions de PUR selon la revendication 5, **caractérisées en ce que** la part des polycarbonatepolyols dans le mélange A2 est de 25 à 70 % en poids, la part des polytétraméthylèneglycolpolyols est de 30 à 75 % en poids, la somme des pourcents en poids des polycarbonate- et polytétraméthylèneglycolpolyols étant égale à 100 %.

7. Dispersions de PUR selon la revendication 5, **caractérisées en ce que** la part des polycarbonatepolyols dans le mélange A2 est de 30 à 65 % en poids, la part en polytétraméthylèneglycolpolyols est de 35 à 70 % en poids, la somme des pourcents en poids des polycarbonate- et polytétraméthylèneglycolpolyols étant égale à 100 %.

8. Procédé pour la préparation des dispersions de PUR selon la revendication 1, **caractérisé en ce que** l'on fait réagir dans un premier temps les constituants A1 et A2 ainsi qu'éventuellement les constituants A3 à A6 en un prépolymère de polyuréthane, **en ce que** l'on disperse alors le prépolymère de polyuréthane dans de l'eau ou par addition d'eau et **en ce que** l'on fait ensuite réagir éventuellement avec de A3 à A6.

9. Utilisation des dispersions de PUR selon la revendication 1 comme agents de revêtement pour la préparation de substrats revêtus.

10. Utilisation des dispersions de PUR selon la revendication 9, **caractérisée en ce que** le substrat est un textile ou du cuir.

11. Utilisation des dispersions de PUR selon la revendication 1 dans le domaine des meubles rembourrés, de la protection au travail et de l'équipement intérieur de véhicules automobiles.

12. Utilisation des dispersions de PUR selon la revendication 1 pour la préparation de hautes couches de mousse en seulement une application.

13. Substrats revêtus contenant un substrat qui présente sur un côté un revêtement contenant des dispersions de PUR selon la revendication 1.

14. Agent de revêtement contenant les dispersions de PUR selon la revendication 1.
